# EUROPÄISCHE PATENTSCHRIFT

(11) **EP 0 669 244 B1**
(45) Veröffentlichungstag und Bekanntmachung des Hinweises auf die Patenterteilung: **15.04.1998**
(21) Anmeldenummer: 95100639.4
(22) Anmeldetag: 19.01.1995
(51) Int. Cl.: B62D 21/15, B60K 5/12

(54) **Crashgünstige Aggregatlagerung**
Support for a mechanical group with good crash behaviour
Support de sécurité en cas d'accidents d'un groupe mécanique

(30) Priorität: 24.02.1994 DE 4405904
(43) Veröffentlichungstag der Anmeldung: 30.08.1995
(73) Patentinhaber: Dr.Ing.h.c. F. Porsche Aktiengesellschaft, 70435 Stuttgart (DE)
(72) Erfinder: Müller, Robert, D-71297 Mönsheim (DE)

(56) Entgegenhaltungen:
- EP-A- 0 098 401
- EP-A- 0 477 654
- BE-A- 395 742
- US-A- 2 378 874
- PATENT ABSTRACTS OF JAPAN vol. 013 no. 473 (M-884) ,26.Oktober 1989 & JP-A-01 186429 (MAZDA MOTOR CORP) 25.Juli 1989,

## Beschreibung

Die Erfindung bezieht sich auf eine crashgünstige Aggregatlagerung nach dem Oberbegriff des Anspruchs 1.

Aus der DE-33 01 708 C2 ist ein Kraftfahrzeug mit einer Antriebseinheit bekannt, die an einem Querträger gehalten ist, der bei einem Crash durch Verformung weitgehend einen Abbau von Stoßenergie übernimmt.

Aus der EP 0 098 401 A1 ist ein Antriebsaggregat für ein Kraftfahrzeug mit einer Lagerung bekannt, die sich nicht nur bei einer bestimmten Stoßkraft löst und Energie umwandelt, sondern die auch bewirkt, daß das Antriebsaggregat an seinem hinteren Ende zwangsläufig abgesenkt wird. Hierzu besteht die Lagerung des Aggregats aus einem Arm, der über einen Halter mit dem Fahrzeugaufbau verbunden ist, wobei der Halter über eine vordere Befestigungsstelle mit dem Fahrzeugaufbau befestigt ist, wobei diese bei einem Frontalaufprall ausreißt.

Aufgabe der Erfindung ist es, eine Aggregatlagerung zu schaffen, die eine sichere Tragfunktion des Antriebsaggregats und eine gleichzeitig auf Crashsicherheit ausgelegte Längsabstützung gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß eine Haltevorrichtung für das Aggregat verwendet wird, welche aus zwei elastisch miteinander verbundenen Bauelementen besteht, über die eine Funktionstrennung möglich ist. Das eine aus einem Tragelement bestehende Bauteil übernimmt die Tragfunktion nämlich die schwingungsisolierte Lagerung des Antriebsaggregats am Fahrzeugaufbau und das weitere aus einer Längsstütze bestehende Bauteil übernimmt eine Energieaufnahme durch plastische Deformation bei einem Crashfall.

Die Längsstütze ist mit dem Tragelement über ein elastisches Gummilagerelement verbunden, das in einer angeformten Aufnahme des Getriebegehäuses gehalten ist. Zur Wirkverbindung mit der Längsstütze bei einem Crashfall weist die Aufnahme eine vorstehende Nase auf, die in eine Fangvorrichtung der Längsstütze eingreift und diese Energie aufnehmend verformt. Hierzu sind in der Längsstütze festigkeitsvermindende Zonen, bestehend aus Sicken, Einschnitten, Bohrungen oder dergleichen gebildet. Diese Zonen bewirken zudem, daß das Aggregat unter Crashbelastung nach unten ausschwenken kann.

Das Tragelement besteht im wesentlichen aus einem querliegend im Fahrzeug angeordneten Schwert mit endseitigen Lagerungen, an dem über das elastische Lager die aus einem profilierten Blechformteil bestehende Längsstütze mit Deformationszonen gehalten ist.

Ein Ausführungsbeispiel der Erfindung ist in der Zeichnung dargestellt und wird im folgenden näher beschrieben.

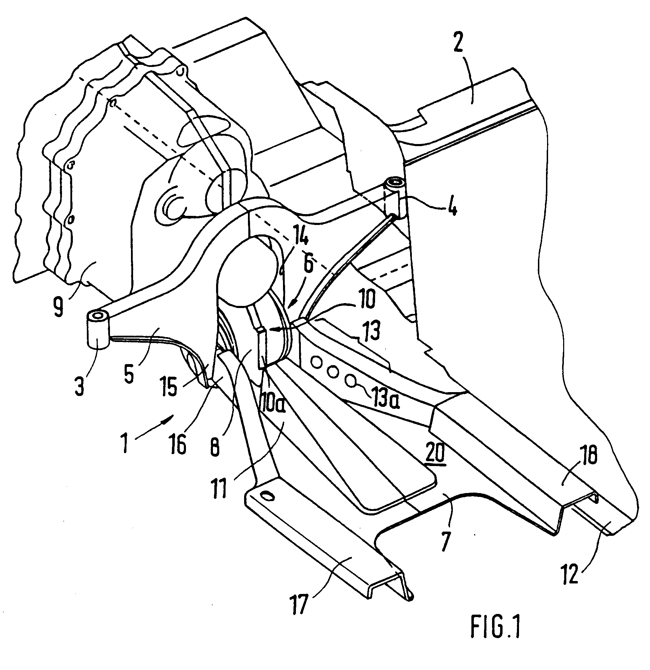

Es zeigen
- Fig. 1: eine schaubildliche Darstellung der Haltevorrichtung mit Tragelement und Längsstütze,

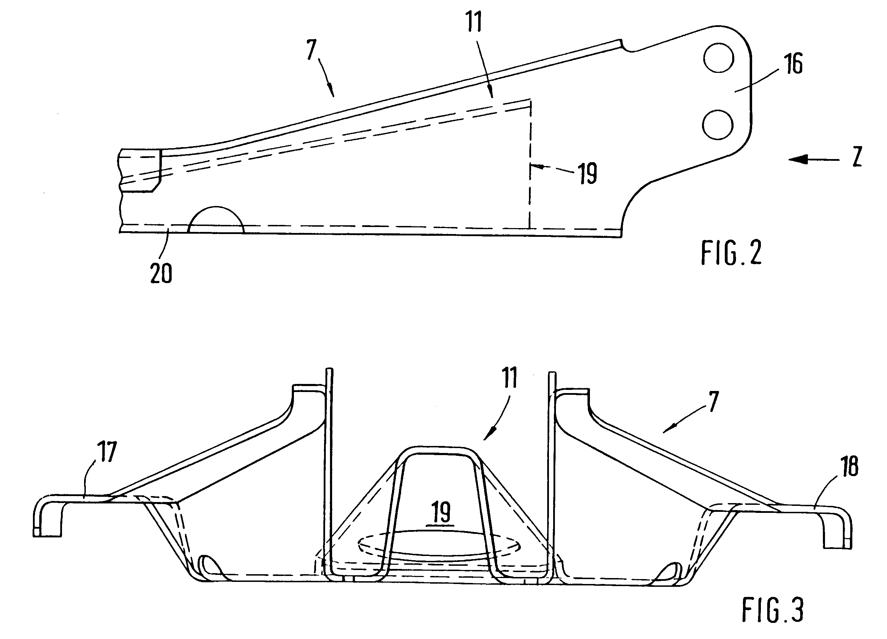

- Fig. 2: eine Seitenansicht der Längsstütze, und
- Fig. 3: eine Ansicht der Längsstütze in Pfeilrichtung Z gesehen.

Die Aggregatlagerung umfasst im wesentlichen eine Haltevorrichtung 1, bestehend aus einem am Fahrzeugaufbau 2 in Lagern 3, 4 abgestützten Tragelement 5, das über ein Verbindungslager 6 mit einer Längsstütze 7 verbunden ist.

Das als Gummilagerelement ausgebildete Verbindungslager 6 ist in einer angeformten Aufnahme 8 eines Getriebegehäuses 9 angeordnet, die eine vorstehende Nase 10a aufweist, welche einer Fangvorrichtung 11 in der Längsstütze 7 zugerichtet ist.

Die Längsstütze 7 ist vorzugsweise in einer senkrechten Ebene des Aggregats am Fahrzeugaufbau bzw. an steifen Längsträgern des Aufbaus 12 gehalten. Die Längsstütze weist festigkeitsvermindernde Zonen 13 auf, welche durch Sinken, Bohrungen 13a, Einschnitte, Wellungen oder dergleichen gebildet sind. Durch diese gezielt angeordneten Deformationszonen 13 kann sich die Längsstütze 7 in Fahrzeuglängsrichtung definiert plastisch verformen und dadurch einen Teil der vom Aggregat auf die Karosserie wirkenden Aufprallenergie aufnehmen.

Die energieaufnehmende Deformation der Längsstütze 7 über die Zonen 13 erfolgt, sobald der Federweg des Gummi-Lagerelements 6 aufgebraucht ist oder dieses zerstört ist und die Nase 10a in Eingriff mit der Fangvorrichtung 11 der Längsstütze 7 kommt.

Die Deformation der Längsstütze 7 erfolgt in der Weise, daß das Aggregat im Nahbereich des Fahrgastraumes nach unten drückt.

Das Tragelement 5 besteht aus einem querliegend im Fahrzeug angeordneten sogenannten Schwert, das an seinen freien Enden die Lager 3 und 4 aufweist. In einer mittigen Ausnehmung 14 des Schwertes ist das Gummi-Lagerelement 6 angeordnet, auf dessen Achse beidseitig Schenke 15 des Tragelements 5 und Schenkel 16 der Längsstütze 7 befestigt sind.

Die Längsstütze 7 ist als Blechformteil ausgeführt, das zwischen profilierten Seitenteilen die Fangvorrichtung 11 aufweist. Diese ist als im Querschnitt U-förmige Anformung ausgeführt, welche eine der Nase 10 zugerichtete Öffnung 19 besitzt. Die Ausformung verjüngt sich bis zur Ebene 20 der Platte 10 keilförmig. In den profilierten Seitenteilen 17, 18 sind die Deformationszonen 13 vorgesehen bzw. sind in diesem Bereich die Sicken, Löcher 13a, Ausschnitte allein oder in Kombination zueinander angeordnet.

## Patentansprüche

1. Crashgünstige Aggregatlagerung für ein Kraftfahrzeug mit einer am Fahrzeugaufbau gelagerten Haltevorrichtung, **dadurch gekennzeichnet**, daß die Haltevorrichtung (1) ein am Fahrzeugaufbau (2) abgestütztes Tragelement (5) sowie eine elastisch verbundene Längsstütze (7) umfasst, die mit einer Fangvorrichtung (11) für ein stirnseitiges Ende (10) eines Getriebegehäuses (9) versehen ist und mindestens einen energieaufnehmenden Deformationsbereich (13) besitzt, wobei das Tragelement eine Ausnehmung (14) zur Aufnahme eines elastischen Verbindungslagers (6) für die Längsstützen (7) aufweist, das in einer angeformten Aufnahme (8) des Getriebegehäuses (9) gehalten ist, welche eine von der Aufnahme (8) vorstehende Nase (10a) besitzt und die energieaufnehmende Deformation der Längsstütze erfolgt, sobald die Nase (10a) in Eingriff mit der Fangvorrichtung (11) der Längsstütze (7) kommt.

2. Lagerung nach Anspruch 1, **dadurch gekennzeichnet**, daß die Fangvorrichtung (11) eine Aufnahme (19) für das mit einer Nase (10a) versehene stirnseitige Ende (10) des Getriebegehäuses (9) aufweist.

3. Lagerung nach den Ansprüchen 1 oder 2, **dadurch gekennzeichnet**, daß der Deformationsbereich (13) der Längstütze (7) durch mindestens eine festigkeitsvermndernde Zone gebildet wird, die derart angeordnet ist, daß das Aggregat (9) unter Crashbelastung nach unten ausschwenkbar ist.

4. Lagerung nach Anspruch 1 oder einem der vorhergehenden Ansprüche, **dadurch gekennzeichnet**, daß die festigkeitsvermindernde Zone (13) aus einzeln angeordneten Sicken, Bohrungen (13a), Einschnitten oder in Kombination zueinander gebildet sind.

5. Lagerung nach Anspruch 1 oder einen der vorhergehenden Ansprüche, **dadurch gekennzeichnet**, daß das Tragelement aus einem querliegend im Fahrzeug angeordneten Schwert (5) besteht, das an seinen beiden freien Enden Lager (3, 4) aufweist und die Ausnehmung (14) mittig ist zur Aufnahme des elastischen Verbindungslagers (6) für die Längsstützen (7).

6. Lager nach Anspruch 1 oder einhem der vorhergehenden Ansprüche, **dadurch gekennzeichnet**, daß das Verbindungslager (6) in einer angeformten Aufnahme (8) des Getriebegehäuses (9) gehalten ist, welche die von der Aufnahme (8) vorstehende Nase (10a) aufweist.

7. Lagerung nach Anspruch 1 oder einem der vorstehenden Ansprüche, **dadurch gekennzeichnet**, daß das Verbindungslager aus einem Gummi-Lagerelement (6) besteht, das in Fahrzeuglängsrichtung einen elastischen Federweg aufweist, an den sich ein plastischer Deformationsweg der Längsstütze (7) anschließt.

8. Lagerung nach Anspruch 1 oder einem der vorhergehenden Ansprüche, **dadurch gekennzeichnet**, daß die Längsstütze (7) aus einem Blechformteil mit Lageraufnahmeschenkeln (16) und anschließenden profilierten Seitenteilen (17, 18) besteht, zwischen denen die im Querschnitt U-förmige Fangvorrichtung (11) angeordnet und deren als Öffnung ausgebildete Aufnahme (19) der Nase (10a) zugerichtet ist.

9. Lagerung nach Anspruch 1oder einem der vorhergehenden Ansprüche, **dadurch gekennzeichnet**, daß im Bereich der beiden an die Schenke (16) anschließenden Seitenteile (17, 18) die Deformationsbereiche (13) gebildet und Endbereiche der beiden Seitenteile (17, 18) an einer steifen Aufbaustruktir (12) des Aufbaus befestigbar sind.

## Claims

1. An assembly mounting with good crash behaviour for a motor vehicle with a retaining device mounted on the vehicle body, **characterized in that** the retaining device (1) comprises a bracket member (5) supported on the vehicle body (2) and a resiliently connected longitudinal support (7) provided with a catch device (11) for a front end (10) of a gearbox housing (9) and comprising at least one energy-absorbing deformation area (13), wherein the bracket member has a recess (14) for receiving a resilient connecting bearing (6) for the longitudinal supports (7) which is held in an integrally moulded receiving means (8) on the gearbox housing (9) which comprises a detent (10a) projecting from the receiving means (8), and the energy-absorbing deformation of the longitudinal support takes place as soon as the detent (10a) engages with the catch device (11) of the longitudinal support (7).

2. A mounting according to Claim 1, **characterized in that** the catch device (11) has a receiving means (19) for the front end (10) of the gearbox housing (9) provided with a detent (10a).

3. A mounting according to Claim 1 or 2, **characterized in that** the deformation area (13) of the longitudinal support (7) is formed by at least one strength-reducing zone which is arranged in such a way that the unit (9) can be pivoted downwards when subjected to a crash.

4. A mounting according to Claim 1 or one of the preceding Claims, **characterized in that** the strength-reducing zone (13) is formed by corrugations, bores (13a) or indentations arranged individually or in combination with one another.

5. A mounting according to Claim 1 or one of the preceding Claims, **characterized in that** the bracket member comprises a tongue (5) arranged transversely in the vehicle and provided at the two free ends thereof with bearings (3, 4), and the recess (14) is central in order to receive the resilient connecting bearing (6) for the longitudinal supports (7).

6. A mounting according to Claim 1 or one of the preceding Claims, **characterized in that** the connecting bearing (6) is held in an integrally moulded receiving means (8) on the gearbox housing (9) which comprises the detent (10a) projecting from the said receiving means (8).

7. A mounting according to Claim 1 or one of the preceding Claims, **characterized in that** the connecting bearing comprises a rubber bearing member (6) provided in the longitudinal direction of the vehicle with a resilient spring path which a plastic deformation path of the longitudinal support (7) adjoins.

8. A mounting according to Claim 1 or one of the preceding Claims, **characterized in that** the longitudinal support (7) comprises a moulded sheet-metal part with bearing-receiving arms (16) and attached profiled side parts (17, 18), between which the catch device (11) of U-shaped cross-section is arranged and of which the receiving means (19) constructed in the form of an opening faces the detent (10a).

9. A mounting according to Claim 1 or one of the preceding Claims, **characterized in that** the deformation areas (13) are formed in the region of the two side parts (17, 18) adjoining the arms (16), and end areas of the two side parts (17, 18) can be secured to a rigid structure (12) of the body.

## Revendications

1. Support de sécurité en cas d'accidents d'un groupe mécanique pour un véhicule automobile, avec un dispositif de maintien monté sur la carrosserie du véhicule, caractérisé en ce que le dispositif de maintien (1) comprend un élément support (5) soutenu sur la carrosserie de véhicule (2), ainsi qu'un appui longitudinal (7) relié élastiquement, pourvu d'un dispositif capteur (11) destiné à une extrémité frontale (10) d'un carter de boîte de vitesses (9) et comportant au moins une zone de déformation (13) absorbant de l'énergie, élément support présentant un évidement (14) destiné à recevoir un palier de liaison (6) élastique destiné aux appuis longitudinaux (7), élément support maintenu dans un logement (8) formé d'un seul tenant et appartenant au carter de boîte de vitesses (9), logement qui comporte un ergot (10a) faisant saillie du logement (8) et la déformation avec absorption d'énergie de l'appui longitudinal s'effectuant dès que l'ergot (10a) vient en contact avec le dispositif capteur (11) de l'appui longitudinal (7).

2. Support selon la revendication 1, caractérisé en ce que le dispositif capteur (11) présente un logement (19) destiné à l'extrémité frontale (10) pourvue d'un ergot (10a) du carter de boîte de vitesses (9).

3. Support selon la revendication 1 ou 2, caractérisé en ce que la zone de déformation (13) de l'appui longitudinal (7) est constituée par au moins une zone diminuant la résistance, disposée de manière que le groupe mécanique (9) peut être dévié par pivotement vers le bas en cas de sollicitation due à un accident.

4. Support selon la revendication 1 ou l'une des revendications précédentes, caractérisé en ce que la zone (13) diminuant la résistance est constituée de moulures, perçages (13a), entailles disposés individuellement ou bien en combinaison les uns avec les autres.

5. Support selon la revendication 1 ou l'une des revendications précédentes, caractérisé en ce que l'élément support est constitué d'une semelle (5) disposée en position transversale dans le véhicule, semelle présentant à ses deux extrémités libres des paliers (3, 4) et l'évidement (14) étant placé centralement, pour recevoir le palier de liaison (6) élastique destiné aux appuis longitudinaux (7).

6. Support selon la revendication 1 ou l'une des revendications précédentes, caractérisé en ce que le palier de liaison (6) est maintenu dans un logement (8) formé d'un seul tenant et appartenant au carter de boîte de vitesses (9), logement qui présente un ergot (10a) faisant saillie du logement (8).

7. Support selon la revendication 1 ou l'une des revendications précédentes, caractérisé en ce que le palier de liaison est constitué d'un élément formant palier (6) réalisé en caoutchouc, présentant une course de déploiement élastique orientée dans la direction longitudinale du véhicule, à laquelle fait suite une course de déformation plastique de la part de l'appui longitudinal (7).

8. Support selon la revendication 1 ou l'une des revendications précédentes, caractérisé en ce que l'appui longitudinal (7) est constitué d'une pièce façonnée en tôle ayant des branches de logement de palier (16) et des parties latérales (17, 18) profilées s'y raccordant, entre lesquelles est disposé le dispositif capteur (11) à section transversale en forme de U et vers le logement (19), réalisé sous forme d'ouverture duquel, l'ergot (10a) est tourné.

9. Support selon la revendication 1 ou l'une des revendications précédentes, caractérisé en ce que, dans la zone des deux parties latérales (17, 18) se raccordant aux branches (16) sont constituées les zones de déformation (13) et les zones d'extrémité des deux parties latérales (17, 18) sont susceptibles d'être fixées sur une structure de carrosserie rigide (12) appartenant à la carrosserie.
